# EUROPÄISCHE PATENTSCHRIFT

(11) **EP 0 750 378 B1**
(45) Veröffentlichungstag und Bekanntmachung des Hinweises auf die Patenterteilung: **15.12.1999**
(21) Anmeldenummer: 96108892.9
(22) Anmeldetag: 04.06.1996
(51) Int. Cl.: H02G 3/26

(54) **Schlauchförmiger Umhüllungskanal zur Ummantelung von Kabelbündel**
Tubular sheathing for covering cable bundles
Gaine tubulaire pour enrobage de faisceau de câbles

(30) Priorität: 21.06.1995 DE 19522405; 29.02.1996 DE 19607559
(43) Veröffentlichungstag der Anmeldung: 27.12.1996
(73) Patentinhaber: A. Raymond & Cie, F-38028 Grenoble-Cédex (FR)
(72) Erfinder: Houte, Bernard, 38240 Meylan (FR); Legat, Jean-Jacques, 38690 Colombe (FR); Raymond, Antoine, 38330 Biviers (FR); Boville, Daniel, 75020 Paris (FR); Lesser, Hans-Jürgen, Dr., 79618 Rheinfelden (DE)
(74) Vertreter: Kirchgaesser, Johannes, Dipl.-Ing.

(56) Entgegenhaltungen:
- EP-A- 0 223 424
- DE-A- 2 706 191
- DE-C- 508 806
- US-A- 3 517 702

## Beschreibung

Die Erfindung betrifft einen schlauchförmigen Umhüllungskanal zur Ummantelung von Kabelbündeln mit einer längsgeschlitzten Umhüllungswand aus elastischem Kunststoff und entlang des Schlitzes angeformten, im Querschnitt L-förmig ausgebildeten Profilstäben, die an den voneinander wegstrebenden Schenkeln von C-förmig ausgebildeten Klammern umfaßt werden.

Derartige Umhüllungskanäle werden beispielsweise im Kraftfahrzeugbau bei der Verlegung der Kabelbündel verwendet und bieten den Vorteil, daß die zu verlegenden Kabelbündel auf dem Weg zwischen den Anschlußstellen gegen äußere Einflüsse gut abgeschirmt sind. Ein weiterer wichtiger Vorteil ist der, daß die zur Verlegung vorbereiteten Bündel als Einheit angeliefert und schnell im Kraftfahrzeug positioniert und angeschlossen werden können.

Die Fixierung und Befestigung dieser Umhüllungskanäle erfolgt üblicherweise mit herkömmlichen Schellen, Kabelbändern oder dergleichen Halteelemente, welche dann mit den verschiedensten gängigen Befestigungsmittel auf dem Karosserieblech in Löchern oder auf Bolzen oder sonstigen Vorsprüngen verankert werden.

Zur Befestigung des Umhüllungskanals ist es aus DE **A 27 06 191** bekannt, die Klammern so auszubilden, daß diese mit ihren Klemmwänden auf den Profilschenkeln der Hohlprofile längsverschieblich geführt und mit Befestigungsmitteln zur Verankerung auf einer Trägerplatte versehen sind. Hierbei wird es als Nachteil empfunden, daß der Schlitz bis auf die Abdeckbereiche der Klammern auf der ganzen Länge des Hohlprofils offengehalten wird, so daß die locker eingelegten Kabel dabei zum Schlitz hin ungeschützt sind. Außerdem kann das mit Kabeln gefüllte Hohlprofil erst mit dem Sockelteil vereinigt werden, wenn letzteres mit Hilfe eines Befestigungsmittels auf der Oberfläche des Untergrundmaterials befestigt ist. Das Hohlprofil kann demnach erst am Einsatzort mit Kabeln bestückt und dann mit den vormontierten Sockelteilen verbunden werden.

Um den Montageaufwand zu vereinfachen, ist aus **US 3 517 702** ein Umhüllungskanal bekannt, bei dem die Profilstäbe an den einander zugekehrten Innenwänden mit ineinander verrastbaren Nut- und Federprofilen versehen sind. Die Klammern sind hierbei mit ihren Klemmwänden auf den Profilschenkeln längsverschieblich geführt und können mit Befestigungsmitteln zur Verankerung auf einer Trägerplatte versehen sein.

Aufgabe der Erfindung ist es, den Umhüllungskanal für Kabelbündel so zu gestalten, daß die umhüllt angelieferten Kabelbündel schnell und einfach an vorbestimmten Befestigungsstellen fixiert bzw. verankert werden können. Eine weitere Aufgabe der Erfindung ist es, durch entsprechende bauliche Maßnahmen dafür zu sorgen, daß die eingelegten Kabelbündel möglichst spielfrei umfaßt werden.

Diese Hauptaufgabe wird nach den kennzeichnenden Merkmalen des Anspruchs 1 im wesentlichen dadurch gelöst, daß daß die von den Profilstäben rechtwinklig abstehenden Schenkel an den voneinander wegstrebenden Kanten mit wellenförmigen Einbuchtungen versehen sind, die mit an den Klemmwänden nach innen vorstehenden Rastnocken derart zusammenwirken, daß die Klammern durch Auffedern der Klemmwände entlang der Schenkel in die jeweils gewünschte Raststellung verschiebbar sind.

Durch die erfindungsgemäße Ausbildung der Klammern und Profilschenkel ist es nunmehr möglich, die Klammern auf dem Profilschenkel entsprechend den vorgegebenen Lochungen in der Trägerplatte zu verrasten, so daß die eingerasteten Klammern bis zu ihrem Einsatz sicher an ihrem Platz gehalten werden. Die Klammern müssen nicht mehr kurz vor ihrem Einsatz genau positioniert werden, wodurch die Montage erheblich erleichtert wird.

Durch die Aussparungen in der Umhüllung nach Anspruch 2 wird erreicht, daß sich die ummantelten Kabelbündel in der Verlegungsebene leichter seitwärts verbiegen lassen. Außerdem bieten die Schlitze bzw. Einschnitte noch den Vorteil, daß einzelne Kabel zu- bzw. weggeführt werden können.

Die ziehharmonikaartige Faltung der Umhüllungswand nach Anspruch 3 dient dem Zweck, den Umhüllungsraum ausdehnbar zu gestalten, so daß die Kabelbündel bei verschiedenen Bündeldurchmesser immer eng, d.h. spielfrei, umspannt bleiben. Auch hier bieten die Einschnitte der Umhüllungswand im Ziehharmonika-Bereich nach Anspruch 4 die gleichen Vorteile wie bei Anspruch 3 und zudem noch die Möglichkeit, die endlos extrudierten und auf eine Rolle aufgewickelten Umhüllungsbahn an jeder gewünschten Stelle zu trennen und - falls erforderlich - auch als Einzelschellen zu verwenden.

Um den Umhüllungskanal möglichst dicht auf der Trägerplatte befestigen zu können, ist es gemäß Anspruch 5 weiterhin von Vorteil, wenn der Boden der Umhüllungswand ebenflächig ausgebildet ist und die Verschlußprofile seitlich angeordnet sind.

Weitere Ausgestaltungen der Erfindung ergeben sich aus den in den Ansprüchen 6 bis 9 angegebenen Ausführungsformen des Umhüllungskanals, wobei deren Vorteile bei der entsprechenden Figurenbeschreibung erläutert werden.

In der Zeichnung sind mehrere Ausführungsbeispiele des erfindungsgemäßen Umhüllungskanals dargestellt und sollen nachfolgend näher erläutert werden. Es zeigt
- Fig. 1: einen schlauchförmigen Umhüllungskanal im geschlossenen Zustand,
- Fig. 2: die dazugehörige Halteklammer mit Rastnocken in einer Ansicht schräg von oben,
- Fig. 3: die gleiche Halteklammer in einer Ansicht schräg von unten,
- Fig. 4: die noch offene Umhüllungswand im Anlieferungszustand,
- Fig.5: eine andere Ausbildung der Umhüllungskanals mit seitlichen Einschnitten in der Wand,
- Fig. 6: einen Umhüllungskanal mit ziehharmonikaartiger Umhüllungswand und Verschlußprofilen unter dem Boden,
- Fig. 7: einen Umhüllungskanal wie Fig. 6, jedoch mit seitlich angebrachten Verschlußprofilen und seitlich aufgesteckter Halteklammer und
- Fig. 8: der gleiche Umhüllungskanal wie Figur 7, jedoch mit Ausrüstung der ebenen Bodenplatte durch eine doppelt wirkende Klebschicht.
- Fig. 9: einen Umhüllungskanal mit in Längsrichtung gewellter Umhüllungswand,
- Fig.10: einen Umhüllungskanal mit elastischen Trennwänden im Innen-raum im offenen Anlieferungszustand,
- Fig.11: den gleichen Umhüllungskanal im geschlossenen Zustand,
- Fig.12: einen Umhüllungskanal mit geschäumter Umhüllungswand im offenen Anlieferungszustand und
- Fig.13: den gleichen Umhüllungskanal im geschlossenen Zustand mit einer Befestigungsklammer.

Der in den Figuren dargestellte schlauchförmige Umhüllungskanal ist aus elastischem Kunststoff hergestellt und dient zur Ummantelung von Kabelbündel und deren Befestigung auf Trägerplatten.

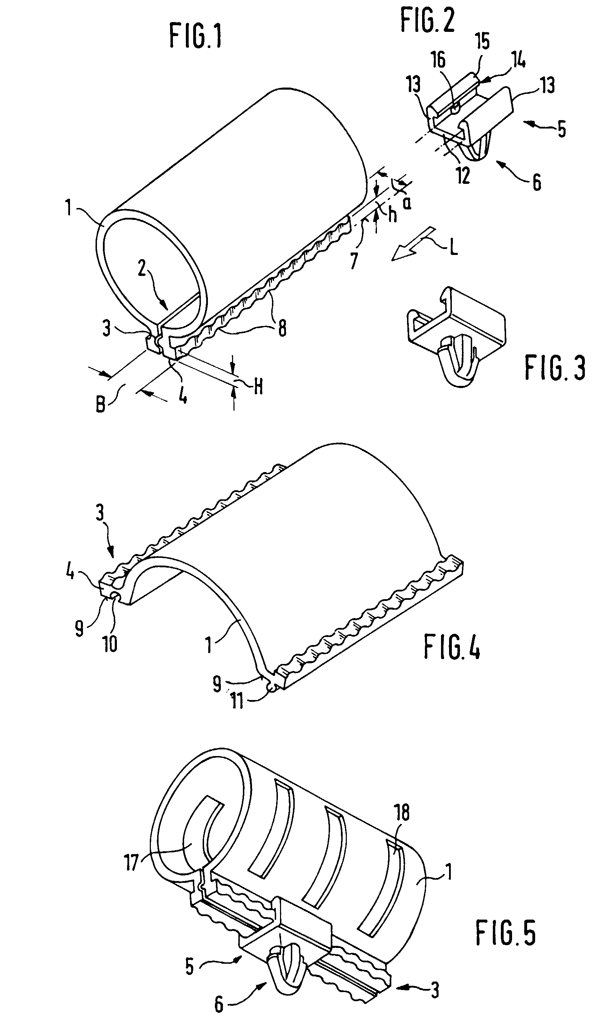

Der Umhüllungskanal gemäß **Figur 1 und 2** besteht hierbei aus einer längsgeschlitzten Umhüllungswand **1** und aus entlang der Schlitze **2** angeformten, im Querschnitt L-förmig ausgebildeten Profilstäben **3**. Diese werden an den voneinander wegstrebenden Schenkeln **4** von C-förmig ausgebildeten Klammern **5** umfaßt, welche auf den Profilschenkeln **4** längsverschieblich geführt und mit Befestigungsmitteln **6** zur Verankerung des Umhüllungskanals auf einer Trägerplatte **21** versehen sind.

Die von den Profilstäben **3** rechtwinklig abstehenden Schenkel **4** sind an den voneinander wegstrebenden Kanten **7** mit wellenförmig ausgebildeten Einbuchtungen **8** versehen und weisen zudem an den einander zugekehrten Innenwänden **9** ineinandergreifbare Nut- und Federprofile **10** und **11** auf, welche vorzugsweise ineinander verrastbar ausgebildet sind (**Fig.4**).

Die C-förmige Klammer **5** besteht, wie aus Figur 2 und 3 ersichtlich, aus einer Grundplatte **12** mit zwei seitlich angeformten Klemmwänden **13,** die an ihren oberen Rändern mit zueinandergerichteten Rastkanten **14** versehen sind. Der Abstand "a" der Klemmwände **13** entspricht hierbei der Gesamtbreite "B" der Profilschenkel **4** und die Innenhöhe "h" der Rastkanten **14** der Höhe "H" der Profilschenkel **4**. Die Rastkanten **14** sind ferner mit zur Mitte schräg zusammenlaufenden Einführflächen **15** versehen, so daß die Klammer **5** auf die geschlossenen Profilschenkel **4** von außen unter elastischer Aufweitung der Klemmwände **13** leicht aufgedrückt werden kann.

Die Klemmwände **13** weisen nach innen vorstehende, etwa halbrunde Rastnocken **16** auf, die der Tiefe der Einbuchtungen **8** entsprechen und mit diesen derart zusammenwirken, daß die Klammer **5** durch elastisches Auffedern der Klemmwände **13** entlang der Profilschenkel **4** in die jeweils gewünschte Raststellung verschiebbar ist.

Wie aus dem in **Figur 5** gezeigten Ausführungsbeispiel ersichtlich, kann die Umhüllungswand **1** beiderseits der Verschlußprofile **3** in regelmäßigen Abständen mit quer zur Längsrichtung eingeschnittenen Aussparungen **17** und **18** versehen sein, welche beim Verlegen der ummantelten Kabelbündel ein seitliches Abbiegen erleichtern. Die Aussparungen **17** und **18** bieten weiterhin die Möglichkeit, längs des verlegten Kanals einzelne Kabel in das Bündel einzuführen bzw. vom Bündel abzuzweigen.

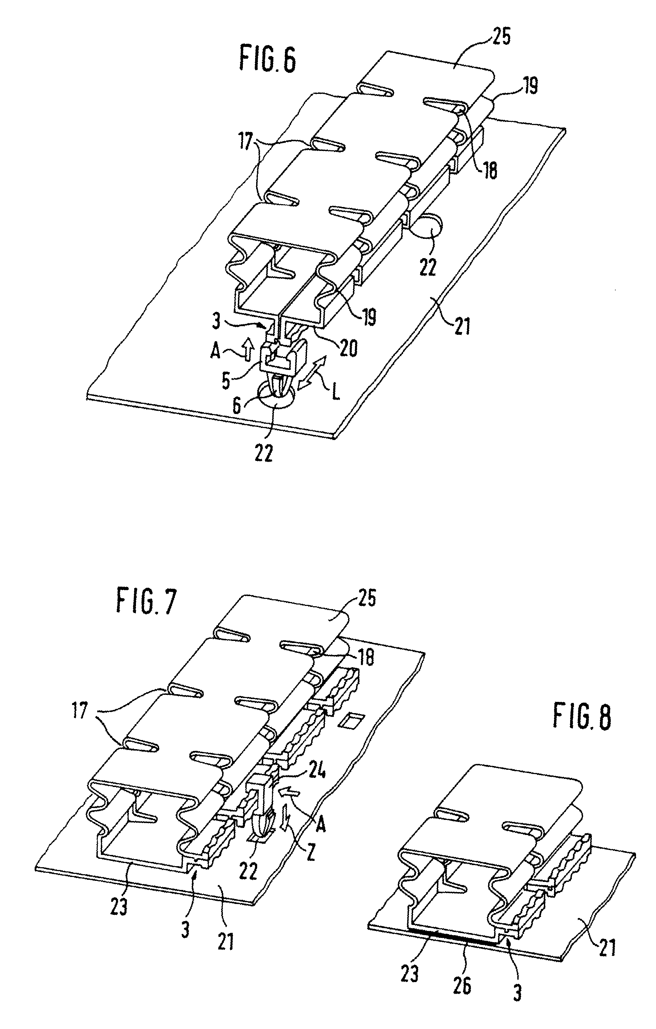

Bei dem in **Figur 6** dargestellten Ausführungsbeispiel des Umhüllungskanals besteht die Umhüllungswand **1** aus einer flachen Decke **25** mit ziehharmonikaartig gefalteten Seitenwänden **19** und einem längsgeschlitzten Boden **20**, der - genau wie bei Fig. 1 und 5 - zwei rechtwinklig nach unten abstehende, ineinanderverrastbare Verschlußprofile **3** aufweist. Unterhalb der Verschlußprofile **3** befindet sich eine Klammer **5**, welche nach dem Aufdrücken auf die zusammengeführten Verschlußprofile **3** in Pfeilrichtung A entlang der Profilschenkel **4** verschiebbar und mittels der Nocken **16** in den Einbuchtungen **8** verrastbar ist.

Die Klammer **5** ist an ihrer Unterseite mit einem Befestigungsfuß **6** versehen, welcher in ein Befestigungsloch **22** einer Trägerplatte **21** einführbar und verankerbar ist. Der Befestigungsfuß **6,** der im vorliegenden Beispiel mit federnd zusammendrückbaren Spreizbeinen versehen ist, kann hierbei jede Gestalt haben, die geeignet ist, in einem Loch, auf einer Kante oder einem Bolzen befestigt zu werden.

**Figur 7** zeigt ein anderes Ausführungsbeispiel einer ziehharmonikaartig ausgebildeten Umhüllungswand, wobei der Boden **23** geschlossen und eben ausgebildet ist und die vorerwähnten Verschlußprofile **3** seitlich davon angeformt sind. Die Klammer **24** wird hierbei von der Seite her in Pfeilrichtung "A" aufgedrückt und mit dem Befestigungsfuß **6** in Pfeilrichtung "Z" in das Loch **22** der Trägerplatte **21** eingedrückt. Die quergeschlitzten Aussparungen **17** und **18** durchschneiden hierbei auch die Verschlußprofile **3** und teilweise den Boden **23** und die Decke **25**, so daß der Kanal beim Verlegen auf der Plattenebene seitlich flexibel und anpassungsfähig ist.

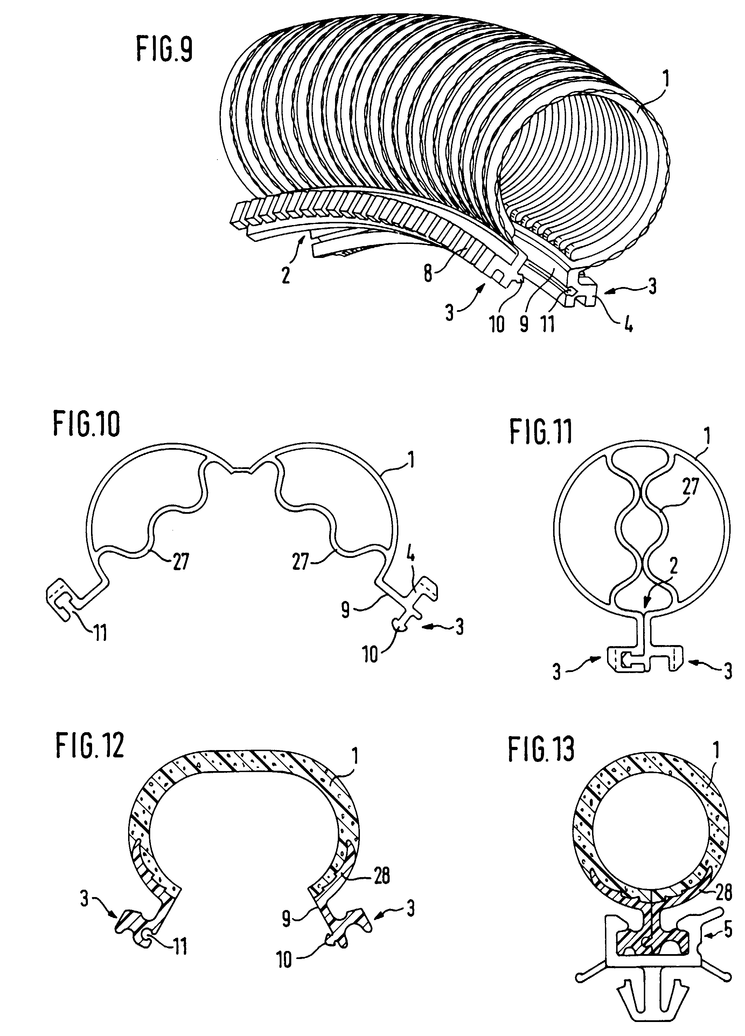

Bei der in **Figur 8** gezeigten Ausführungsform eines ziehharmonikaartig gefalteten Umhüllungskanals ist der Boden **23** mit einer Klebschicht **26** ausgerüstet und wird mit dieser direkt auf der Trägerplatte **21** verklebt, so daß ein seitliches Halteelement wie bei Fig. 6 und 7 nicht erforderlich ist.
Bei dem in **Figur 9** gezeigten Ausführungsbeispiel ist die Umhüllungswand **1** ähnlich wie bei einem Wellrohr - in Längsrichtung gewellt ausgebildet, wodurch der Umhüllungskanal beim Verlegen der Kabelbündel in jede gewünschte Kurvenform gebracht und damit den örtlichen Gegebenheiten wie auch den Unebenheiten der Trägerplatte gut angepaßt werden kann. Die gewellte Umhüllungswand läßt sich auf einfache Weise durch Extrusion herstellen, wobei die Einbuchtungen **8** vorzugsweise an der gleichen Stelle vorgesehen werden wie die Wellentäler der Umhüllungswand.

**Figur 10 und 11** zeigen ein weiteres Ausführungsbeispiel eines Umhüllungskanals **1** mit beiderseits des Schlitzes **2** angeformten, elastischen Trennwänden **27**, welche den Innenraum wellenförmig durchqueren und in dem Schlitz **2** gegenüberliegenden Wandbereich abgestützt sind, wobei die Trennwände **27** entweder mit einem freien Ende an der Innenwand anliegen oder mit diesem Ende - wie in der Zeichnung dargestellt - ebenfalls an der Innenwand angeformt sein können. Figur 10 zeigt den Umhüllungskanal im extrudierten Anlieferungszustand, während bei Figur 11 der Umhüllungskanal geschlossen ist.

Bei dem in **Figur 12 und 13** dargestellten Ausführungsbeispiel besteht die Umhüllungswand **1** aus einem geschäumten, thermoplastischen Elastomer, wie beispielsweise Santoprene, während die L - förmigen Profilstäbe **3** aus hartem Kunststoffmaterial, wie beispielsweise Polypropylen, gebildet sind.

Diese Profilstäbe **3** sind beiderseits des Schlitzes **2** von außen an die weiche Umhüllungswand über einen nach innen gezackten Flansch **28** einstückig angeformt, so daß die Umhüllungswand **1** an ihrer Innenseite über den ganzen Umfang das Kabelbündel dämpfend umfaßt.

## Patentansprüche

1. Schlauchförmiger Umhüllungskanal zur Ummantelung von Kabelbündeln mit einer längsgeschlitzten Umhüllungswand ( 1 ) aus elastischem Kunststoff und entlang des Schlitzes ( 2 ) angeformten, im Querschnitt L-förmig ausgebildeten Profilstäben ( 3 ), die an den voneinander wegstrebenden Schenkeln ( 4 ) von C-förmig ausgebildeten Klammern ( 5 ) umfaßt werden, wobei diese Klammern ( 5 ) mit ihren Klemmwänden ( 13) auf den Profilschenkeln ( 4 ) längsverschieblich geführt und mit Befestigungsmitteln ( 6 ) zur Verankerung auf einer Trägerplatte (21) versehen sind, und wobei die Profilstäbe ( 3 ) an den einander zugekehrten Innenwänden ( 9 ) mit ineinander verrastbaren Nut- und Federprofilen (10) und (11) versehen sind, **dadurch gekennzeichnet,** daß die von den Profilstäben ( 3 ) rechtwinklig abstehenden Schenkel ( 4 ) an den voneinander wegstrebenden Kanten ( 7 ) mit wellenförmigen Einbuchtungen ( 8 ) versehen sind, die mit an den Klemmwänden (13) nach innen vorstehenden Rastnocken ( 16 ) derart zusammenwirken, daß die Klammern ( 5 ) durch Auffedern der Klemmwände ( 13) entlang der Schenkel ( 4 ) in die jeweils gewünschte Raststellung verschiebbar sind.

2. Umhüllungskanal nach Anspruch 1, dadurch gekennzeichnet, daß die Umhüllungswand ( 1 ) beiderseits der Verschlußprofilstäbe ( 3 ) in regelmäßigen Abständen mit quer zur Längsrichtung eingeschnitten Aussparungen ( 17) und (18 ) versehen sind.

3. Umhüllungskanal nach Anspruch 1, dadurch gekennzeichnet, daß die Umhüllungswand ( 1 ) in Längsrichtung beiderseits der Verschlußprofilstäbe ( 3 ) zieharmonika-artig gefaltet ist.

4. Umhüllungskanal nach Anspruch 3, dadurch gekennzeichnet, daß die Faltenbereiche ( 19) der Umhüllungswand ( 1 ) in regelmäßigen Abständen mit quer geschlitzten Aussparungen ( 17 ) und ( 18) versehen sind, die teilweise auch in den Boden ( 23 ) und die Decke ( 25 ) hineinragen.

5. Umhüllungskanal nach Anspruch 3 oder 4, dadurch gekennzeichnet, daß der Boden ( 23 ) der Umhüllungswand ( 1 ) eben ausgebildet ist und die Verschlußprofilstäbe (3) seitlich davon angeformt sind.

6. Umhüllungskanal nach Anspruch 1, dadurch gekennzeichnet, daß die Umhüllungswand ( 1 ) in Längsrichtung gewellt ausgebildet ist.

7. Umhüllungskanal nach Anspruch 1, dadurch gekennzeichnet, daß an der Innenseite der Umhüllungswand ( 1) beiderseits des Schlitzes ( 2) elastische Trennwände ( 27 ) angeformt sind, welche den Innen-raum wellenförmig durchqueren und im dem Schlitz ( 2 ) gegenüberliegenden Wandbereich abgestützt sind.

8. Umhüllungskanal nach Anspruch 1, dadurch gekennzeichnet, daß die Umhüllungswand ( 1 ) aus einem geschäumten , thermoplastischen Elastomer besteht, während die L-förmigen Profilstäbe (3) mit ihren voneinander wegstrebenden Schenkeln ( 4 ) aus hartem Kunststoffmaterial gebildet sind.

9. Umhüllungskanal nach Anspruch 8, dadurch gekennzeichnet, daß die harten Profilstäbe (3) beiderseits des Schlitzes ( 2) von außen an die weiche Umhüllungswand ( 1 ) über einen nach innen gezackten Flansch ( 28 ) einstückig angeformt sind.

## Claims

1. A tubular sheathing duct for encasing cable bundles having a longitudinally slit sheathing wall (1) of elastic plastics material and profile bars (3) which are formed thereon along the slit (2) and which are of an L-shaped cross-section and which are embraced by clips (5) of C-shaped configuration at the limbs (4) which extend away from each other. wherein said clips (5) are longitudinally slidably guided with their clamping walls (13) on the profile limbs (4) and are provided with fixing means (6) for anchoring on a carrier plate (21). and wherein at the mutually facing inside walls (9) the profile bars (3) are provided with groove and tongue profiles (10) and (11) which are latchable one into the other, characterised in that the limbs (4) which project from the profile bars (3) at a right angle are provided at the edges (7) which face away from each other with wave-shaped recesses (8) which co-operate with retaining projections (16) protruding inwardly at the clamping walls (13). in such a way that the clips (5) are slidable into the respectively desired retaining position along the limbs (4) by springing open the clamping walls (13).

2. A sheathing duct according to claim 1 characterised in that the sheathing wall (1) is provided on both sides of the closure profile bars (3) at regular spacings with openings (17) and (18) which are cut in transversely with respect to the longitudinal direction.

3. A sheathing duct according to claim 1 characterised in that the sheathing wall (1) is folded concertina-like in the longitudinal direction on both sides of the closure profile bars (3).

4. A sheathing duct according to claim 3 characterised in that the fold regions (19) of the sheathing wall (1) are provided at regular spacings with transversely slit openings (17) and (18) which partially also extend into the bottom (23) and the top (25).

5. A sheathing duct according to claim 3 or claim 4 characterised in that the bottom (23) of the sheathing wall (1) is flat and the closure profile bars (3) are formed thereon laterally thereof.

6. A sheathing duct according to claim 1 characterised in that the sheathing wall (1) is of a corrugated configuration in the longitudinal direction.

7. A sheathing duct according to claim 1 characterised in that formed on the inside of the sheathing wall (1) on both sides of the slit (2) are elastic dividing walls (27) which pass in a wavy configuration through the internal space and which are supported in the wall region which is opposite to the slit (2).

8. A sheathing duct according to claim 1 characterised in that the sheathing wall (1) comprises a foamed thermoplastic elastomer while the L-shaped profile bars (3) with their limbs (4) that extend away from each other are formed from hard plastics material.

9. A sheathing duct according to claim 8 characterised in that the hard profile bars (3) on both sides of the slit (2) are integrally formed from the outside on to the soft sheathing wall (1) by way of an inwardly scalloped flange (28).

## Revendications

1. Conduit de gainage en forme de tuyau souple destiné à envelopper des faisceaux de câbles, se composant d'une paroi de gainage (1) faite de matière plastique élastique et de baguettes profilées (3) ayant, sur leur section transversale, une configuration en forme de L, réalisées solidaires de cette paroi par moulage le long de la fente (2), qui sont enserrées au niveau de leurs branches (4) tendant à s'écarter l'une de l'autre par des agrafes (5) ayant une configuration en forme de C, lesdites agrafes (5) étant emmanchées, au niveau de leurs parois de blocage (13), avec la possibilité d'être déplacées par glissement dans le sens longitudinal, sur les branches profilées (4) et étant munies de moyens de fixation (6) pour ancrage sur une plaque support (21), les baguettes profilées (3) étant en l'occurrence munies, au niveau de leurs parois intérieures se faisant respectivement face (9) d'éléments profilés respectivement en forme de goulotte (10) et de protubérance élastique (11) destinées à s'encastrer l'une dans l'autre, caractérisé en ce que les branches (4) faisant saillie selon une disposition en angle droit depuis les baguettes profilées (3) sont munies, au niveau de leurs rives (7) ayant tendance à s'écarter l'une de l'autre, de dentelures ondulées (8), dont l'interaction d'encastrement avec les ergots d'accrochage (16) faisant saillie vers l'intérieur, depuis les parois de blocage (13) est telle que les agrafes (5) sont susceptibles d'être déplacées, par cédage élastique des parois de blocage (13) le long des branches (4) pour être amenées dans une quelconque position d'encastrement souhaitée.

2. Conduit de gainage selon la revendication 1, caractérisé en ce que la paroi de gainage (1) est munie, de part et d'autre des baguettes de fermeture profilées (3), d'évidements (17) et (18) ménagés, à intervalles réguliers, transversalement par rapport à son sens longitudinal.

3. Conduit de gainage selon la revendication 1, caractérisé en ce que la paroi de gainage (1) est plissée en accordéon dans le sens longitudinal de part et d'autre des baguettes de fermeture profilées (3).

4. Conduit de gainage selon la revendication 3, caractérisé en ce que les parties plissées (19) de la paroi de gainage (1) comportent, répartis à intervalles réguliers, des évidements en forme de fente disposés transversalement, qui pénètrent partiellement également dans le fond (23) et le couvercle (25).

5. Conduit de gainage selon la revendication 3 ou 4, caractérisé en ce que le fond (23) de la paroi de gainage (1) a une configuration lisse et unie et en ce que les baguettes de fermeture profilées (3) sont réalisées solidaires par moulage sur les côtés de celui-ci.

6. Conduit de gainage selon la revendication 1, caractérisé en ce que la paroi de gainage (1) a une configuration ondulée suivant son sens longitudinal.

7. Conduit de gainage selon la revendication 1, caractérisé en ce que des parois de séparation élastiques (27) sont réalisées, solidaires par moulage, sur la face intérieure de la paroi de gainage (1), de part et d'autre de la fente (2), qui traversent, selon une disposition ondulée, le gabarit intérieur de celle-ci et qui prennent appui sur la zone de paroi diamétralement opposée à la fente (2).

8. Conduit de gainage selon la revendication 1, caractérisé en ce que la paroi de gainage (1) est réalisée à partir d'un matériau élastomère thermoplastique expansé, tandis que les baguettes profilées en forme de L (3), ainsi que leurs branches (4) tendant à s'écarter l'une de l'autre sont réalisées dans une matière plastique dure.

9. Conduit de gainage selon la revendication 8, caractérisé en ce que les baguettes profilées dures (3) sont rendues solidaires, depuis l'extérieur, de la paroi de gainage (1) souple, par l'intermédiaire d'une bride (28) munie de dents orientées vers l'intérieur, pour constituer une configuration monobloc.
